# EUROPEAN PATENT APPLICATION

(11) **EP 2 768 113 A1**
(43) Date of publication of application: **20.08.2014**
(21) Application number: 11873959.8
(22) Date of filing: 14.10.2011
(51) Int. Cl.: H02J 7/04

(54) **ELECTRIC VEHICLE CHARGING DEVICE**

(71) Applicant: Toyota Jidosha Kabushiki Kaisha, Toyota-shi, Aichi 471-8571 (JP)
(72) Inventor: MITSUTANI Noritake, Toyota-shi Aichi 471-8571 (JP)
(74) Representative: TBK
(86) International application number: PCT/JP2011/073643
(87) International publication number: WO 2013/054435

(57) **Abstract**

A charging device is provided that charges an onboard battery, and that can: acquire a level of power that can be supplied by an external power source, determine a charging start time point, and terminate charging at a charging completion time point that is set with a timer. The charging device (10) includes an AC-DC converter (13) that converts AC power supplied by an external power source (93) into DC power, an AC relay (8b) that connects and disconnects the external power source (93) and the AC-DC converter (13), a DC relay (31) that connects and disconnects the AC-DC converter (13) and a battery (4), a timer, and a controller (18). The user sets a charging completion time point with the timer (9). When the charging completion time point has been set, the controller (18) closes the AC relay (8b), and specifies the level of power that can be supplied by the external power source (93). Next, the controller (18) determines a charging start time point from the specified level of power that can be supplied and the charging completion time point. The controller (18) restarts at the determined charging start time point and starts the charging process.

## Description

### TECHNICAL FIELD

The present invention relates to a technique for charging a vehicle onboard battery using an external power source. In particular, it relates to a device that charges a high output high capacity battery for powering a motor that drives wheels of a vehicle. In this specification, the term "electric vehicle" includes a hybrid vehicle that is provided with both a motor and an engine for driving the vehicle wheels. Moreover, the term "electric vehicle" also includes a fuel cell vehicle.

### BACKGROUND ART

In order to take account of convenience of a user, a charging device for an onboard battery sometimes incorporates a timer. The user connects the electric vehicle to an external power source and sets the timer. The charging device starts when the set time point arrives.

One improvement technique related to a charging device that incorporates a timer is disclosed in Patent Document 1. Patent Document 1 discloses a technique for reducing the noise of a cooling fan and/or the noise of a water pump during charging, in view of the fact that, in some cases, charging is performed during the night-time.

### CITATION LIST

### PATENT LITERATURE

Patent Document 1: Japanese Patent Application Publication 2010-246320.

### SUMMARY OF INVENTION

This specification provides another improvement technique related to a charging device that incorporates a timer. A user sets a charging completion time point using the timer. It is necessary for the charging device to calculate a charging start time point from this charging completion time point. If a level of power that can be supplied by an external power source is already known, then it is possible to determine the charging start time point from the known level of power that can be supplied and the desired charging completion time point. However, for example, in some cases, a region over which the charging device is sold is a wide area, and a level of commercial power that can be supplied (from an external power source) may vary according to locations. In other words, in some cases, the charging device cannot specify in advance the level of power that can be supplied. If the level of power that can be supplied is unknown, then the charging device is not capable of determining the charging start time point. This specification provides a charging device and a charging method that can acquire the level of power that can be supplied by the external power source and can determine a charging start time point, and that can terminate the charging process at the charging completion time point that has been set with the timer.

Normally, a charging device includes an AC-DC converter that converts AC power supplied by an external power source into DC power, an AC relay that connects and disconnects the external power source to and from the AC-DC converter, a DC relay that connects and disconnects the AC-DC converter to and from the battery, a timer, and a controller. It should be noted that there is no actual constructional difference between the "AC relay" and the "DC relay". In this specification, the terms "AC relay" and "DC relay" are used in order to distinguish these two relays.

As previously described, the timer is used for setting the charging completion time point. And the controller controls the AC relay and the DC relay on the basis of the setting of the timer. Moreover, initially the AC relay and the DC relay are open. In other words, before charging starts, the external power source and the AC-DC converter are not connected together. Also the AC-DC converter and the battery are not connected together. With the charging device disclosed in this specification, after the charging completion time point has been set, the controller specifies the level of power that can be supplied by the external power source by closing the AC relay and measuring a supply voltage of the external power source. Next, the controller determines a charging start time point from the specified level of power that can be supplied and the charging completion time point. If the charging start time point is later than the present moment, the controller sets its own timer so that it will restart at the charging start time point, and then transitions to a sleep mode. The controller then restarts at the charging time point that has thus been determined, and closes the AC relay and the DC relay and starts the charging process.

By the AC relay being closed, in other words by the external power source being connected, the charging device is able to know an output voltage of the external power source. In order to specify the level of power that can be supplied, in addition to knowing the output voltage, it is necessary also to know current capacity that can be supplied. It is possible to know the current capacity that can be supplied from the external power source, for example, by employing a pilot signal as defined by the SAE (Society of Automotive Engineers) standard J1772 (a standard for a charging interface for electric vehicles). In the J1772 standard, a so-called EVSE (Electric Vehicle Supply Equipment) device is defined that is connected between an external power source and a charging device (i.e. an AC-DC converter). The EVSE is a device that outputs a signal that transmits to an automobile the electrical current capacity that can be supplied by an external power source, and that is equipped with an interlock mechanism that stops supply of power when the automobile is moved. Further, in SAE-J1772, a communication protocol between the EVSE and an electric vehicle (i.e. a charging device) is prescribed, and a so-called pilot signal is defined among signal lines. This pilot signal transmits the current capacity that can be supplied by an external power source from the EVSE to the charging device. To put it in another manner, the pilot signal specifies the current capacity that can be supplied by the external power source. Moreover, it is prescribed that bidirectional communication should be possible via the communication line through which the pilot signal is transmitted, so that it is also possible for a command to be issued from the charging device side to the EVSE for starting supply of power. With this meaning, the pilot signal line is also called as a control pilot line. The value obtained by multiplying the current capacity that can be supplied by the external power source by its output voltage is equivalent to the level of power that can be supplied by the external power source.

If the charging device that is disclosed in the present specification conforms to the SAE-J1772 standard, then it is capable of utilizing the pilot signal described above. If it is possible to know the output voltage and the current capacity that can be supplied by the external power source, then it is possible to determine the level of power that can be supplied (= [the output voltage] x [the current capacity that can be supplied]).

It should be noted that a CCID device (Charging Circuit Interrupt Device) is also defined by SAE-J1772, and this device includes an AC relay that disconnects the external power source from the charging device (i.e. from the AC-DC converter). Such an AC relay of the CCID is an example of the AC relay that is to be included in the charging device disclosed in the present specification.

The charging device disclosed in the present specification has the following further advantageous aspects. As previously described, two relays (the AC relay and the DC relay) are connected between the external power source and the battery. With the charging device described above, the DC relay is not closed until charging is actually started. Thus there is no loss of durability of the DC relay with the charging device disclosed in the present specification, since the number of times that the DC relay is changed over is reduced.

A closed circuit voltage of the battery (Closed Circuit Voltage: CCV) cannot be measured if the DC relay is not closed. Thus, the controller may be configured to measure an open circuit voltage of the battery (Open Circuit Voltage: OCV) before the charging process is started (i.e. without closing the DC relay), and to terminate the charging process without closing the DC relay if the open circuit voltage is higher than a predetermined voltage threshold, in other words if the SOC (State Of Charge) of the battery is sufficiently high. Thus, due to reduction of the number of times that the DC relay is closed, there is no deterioration of the durability of the DC relay.

The present specification also provides a novel charging method. This method includes the following three steps: (1) specifying the level of power that can be supplied by an external AC power source; (2) determining a charging start time point from a charging completion time point set by a user and a specified level of power that can be supplied; and (3) at the charging start time point, closing a relay that connects together a battery and an AC-DC converter that converts the power of the external AC power source into DC. This method is also capable of terminating the charging process at the charging completion time point that has been set with the timer.

The electric vehicle provided with the charging device disclosed in the present specification or a part of the charging device is also an aspect of the novel technique disclosed in the present specification.

The details of the technique disclosed in the present specification and yet further improvements will now be explained in terms of an embodiment.

### BRIEF DESCRIPTION OF DRAWINGS

Fig. 1 is a schematic figure showing a charging system for an electric vehicle;
Fig. 2 is a block diagram of the charging system; and
Fig. 3 is a flow chart for charging processing.

### DESCRIPTION OF EMBODIMENTS

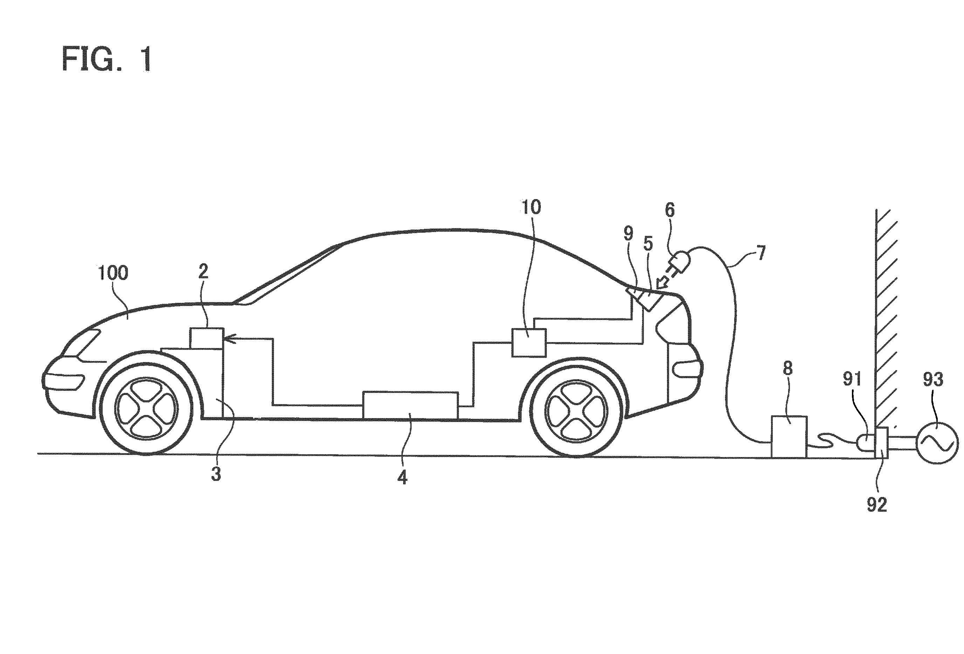

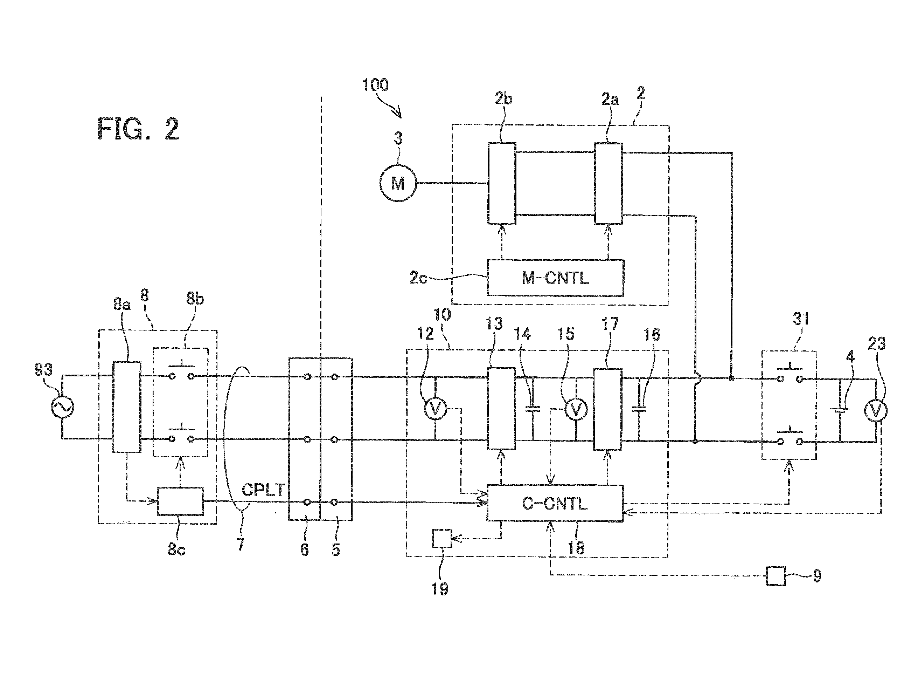

An electric vehicle 100 according to an embodiment will now be explained with reference to the drawings. A schematic illustration of a charging system for the electric vehicle 100 is shown in Fig. 1. And a block diagram of the charging system is shown in Fig. 2. Here, the term "charging system" means a group of devices that regulate the flow of electrical energy from an external power source to a battery of the vehicle. Moreover, Figs. 1 and 2 show only those devices that are necessary for explanation of the present invention, and it should be noted that not all the devices included in the electric vehicle are shown.

An outline of the charging system will now be explained with reference to Fig. 1. The electric vehicle 100 is a single motor type electric vehicle that is propelled by a motor 3. A high output high capacity battery 4 is mounted to the electric vehicle 100, and DC power of the battery 4 is converted by an inverter 2 into AC power which is supplied to the motor 3. While the battery 4 can be charged with regenerated power by utilizing the energy of deceleration of the vehicle, it is also possible to charge the battery 4 from an external power source (i.e. from a commercial power source 93). The commercial power source 93 provides AC power at, for example, 100 volts.

Charging from the external power source is performed via an EVSE 8. A plug 91 is inserted into a power socket 92 that is provided in a residence, so that the EVSE 8 acquires power from the external power source 93. A cable 7 extends from the EVSE 8, and a charging plug 6 is attached to the end of that cable. The charging plug 6 is inserted into a connector 5 of the vehicle 100, and power is supplied from the external power source 93 to the vehicle 100 via the EVSE 8. A charging device 10 is provided to the electric vehicle 100, and this converts the AC power supplied by the external power source 93 into DC power which is outputted to the battery 4.

A console of a timer 9 is provided next to the connector 5 of the vehicle 100. The user is able to input a charging completion time by using this console. The main circuitry of the timer 9 is implemented in the charging device 10. The charging device 10 operates so that charging is completed at a set charging completion time. The charging processing will be explained subsequently in detail.

The charging system will now be explained in detail with reference to Fig. 2. The EVSE 8 comprises a power leakage detector 8a, an AC relay 8b, and a control circuit 8c. The AC relay 8b is a switch that connects and disconnects the external power source 93 to and from the vehicle 100. Initially, this AC relay 8b is open. In other words, initially, the external power source 93 and the EVSE 8 are electrically disconnected from one another. The AC relay 8b is controlled by the control circuit 8c. If the power leakage detector 8a detects power leakage, the control circuit 8c opens the AC relay 8b, in other words cuts off the vehicle 100 from the external power source 93. The control circuit 8c sends a pilot signal to the charging device 10 of the vehicle via the cable 7. "CPLT" in Fig. 2 denotes a control pilot signal line (hereinafter termed the "CPLT line"), and the pilot signal is sent via this line. Bidirectional communication can be performed via this CPLT line. The details will be described hereinafter. The EVSE 8 including the AC relay 8b also functions as a CCID (Charging Circuit Interrupt Device). The other two lines of the cable 7 are lines for supplying power.

The charging device 10, which receives power from the EVSE 8, is provided with an AC-DC converter 13 and a conditioning circuit 17. The AC power supplied from the EVSE 8 is converted into DC power by the AC-DC converter 13. For example, the AC-DC converter 13 may convert inputted commercial 100 VAC power into 300 volts DC, this being the rated voltage of the battery 4. The output current of the AC-DC converter 13 is smoothed by the conditioning circuit 17, and is then supplied to the battery 4. A first voltage sensor 12 that measures AC voltage is provided to the input side of the AC-DC converter 13, and a second voltage sensor 15 that measures DC voltage is provided to the output side of the AC-DC converter 13. Moreover, respective capacitors 14 and 16 for current smoothing are connected to the input side and the output side of the conditioning circuit 17. The sensor data from the voltage sensors 12 and 15 is sent to a charging controller 18. And the charging controller 18 controls the AC-DC converter 13 and the conditioning circuit 17 on the basis of the state of the sensor data from the voltage sensors and the state of the CPLT signal. The AC-DC converter 13 is provided with many switching circuits, and the charging controller 18 provides switching commands (i.e. PWM signals) to those switching circuits. To express this in another manner, the charging controller 18 is capable of changing over the AC-DC converter 13 between activating and deactivating. The charging controller 18 is also capable of sending commands to the EVSE 8 via the CPLT line (as will be described hereinafter). Moreover, the charging controller 18 controls a DC relay 31 of the vehicle, and stores the state of charge (SOC: State Of Charge) and certain results in a non-volatile memory 19. Here, this DC relay 31 is a switch that connects or disconnects the battery 4 to and from the drive system of the vehicle. The DC relay 31 is also called the "main system relay".

A third voltage sensor 23 is connected to the battery 4. This third voltage sensor 23 is connected to the battery 4 without any relationship to the DC relay 31, and measures the open circuit voltage (OCV: Open Circuit Voltage) of the battery 4. The open circuit voltage of the battery 4 as measured by the third voltage sensor 23 is provided to the charging controller 18.

The battery 4 is also connected to the inverter 2 via the DC relay 31. The inverter 2 is provided with a voltage raising circuit 2a and an inverter circuit 2b, and a motor controller 2c supplies commands (i.e. PWM signals) to switching circuits included in those devices. It should be noted that the character string "C-CNTL" in Fig. 2 denotes the "charge controller", while the character string "M-CNTL" denotes the "motor controller".

The pilot signal protocol will now be explained in general terms. When the external power source 93 is connected, the EVSE 8 (i.e. the control circuit 8c) raises the potential on the CPLT line to a voltage V3 (typically 12 V). The charging device 10 (i.e. the charging controller 18) monitors the potential on the CPLT line, detects the fact that its potential has risen to the voltage V3, and thus knows that a supply of power can be received from the EVSE 8. The potential on the CPLT line also functions as a message (i.e. as a command) from the charging controller 18 to the EVSE 8. In order to know the current capacity that can be received, the charging controller 18 lowers the potential on the CPLT line to a voltage V2 (typically 9 V). When the EVSE 8 (i.e. its control circuit 8c) detects the fact that the potential on the CPLT line has dropped to the voltage V2, it checks the voltage and the current of the external power source 93, specifies the current capacity that it can supply, and sends this to the charging controller 18. In concrete terms, the EVSE 8 outputs a pulse signal to the CPLT line. At this time, the duty ratio of the pulse signal specifies the current capacity that can be supplied. The charging device 10 monitors this pulse signal on the CPLT line, and thus becomes aware of the current capacity that can be supplied. Then, after having completed preparations for charging, the charging device 10 closes the DC relay 31 (in other words, connects the charging device 10 and the battery 4 together), and also drops the potential on the CPLT line to a voltage V1 (typically 6 V). The fact that the potential on the CPLT line drops to the voltage V1 means, to the EVSE 8, that the start of charging is being commanded. Thus, when the EVSE 8 detects that the potential on the CPLT line has dropped to the voltage V1, it closes the AC relay 8b. The external power source 93 and the charging device 10 are thus electrically connected together, and charging starts. Since the protocol related to the pilot signal is prescribed in SAE-J1772, reference should be made thereto for further details.

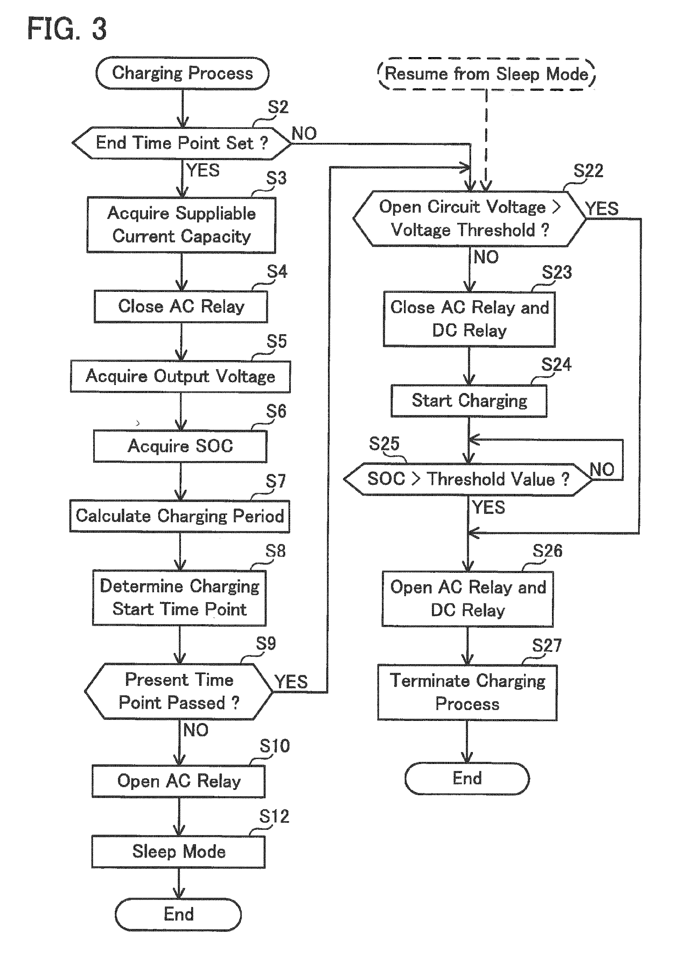

The charging process performed by the charging controller 18 will now be explained. A flow chart for this charging processing is shown in Fig. 3. The charging controller 18 starts the process of Fig. 3 when a start switch that is provided upon the console of the timer 9 is pressed. Moreover, in some cases, connection of the charging plug 6 of the EVSE 8 to the vehicle side connector 5 may function as a trigger for the start of charging. In other words, it is also possible for the process of Fig. 3 to be started when the charging plug 6 is connected to the vehicle side connector 5.

First, the charging controller 18 checks whether or not an end time point is set (step S2). If the end time point has been set with the timer 9 (YES in step S2), then the charging controller 18 lowers the potential on the CPLT line to the voltage V2, and acquires the current capacity that can be supplied by the external power source 93 via the EVSE 8 (step S3). Next, the charging controller 18 drops the potential of the CPTL line to the voltage V1, and thus issues a command to the EVSE 8 to close the AC relay 8b (step S4). When the AC relay 8b is closed, the external power source 93 and the charging device 10 become electrically connected. Then the charging controller 18 measures the output voltage of the external power source 93 with the first voltage sensor 12 (step S5). And, from the current capacity and the output voltage that can be supplied by the external power source 93, the charging controller 18 specifies the level of power that can be supplied.

Next, the charging controller 18 measures the open circuit voltage of the battery 4 using the third voltage sensor 23. The charging controller 18 estimates the remaining capacity SOC (State Of Charge) of the battery 4 from its open circuit voltage (step S6). Moreover, from the power that can be supplied by the external power source 93 and from the SOC, the charging controller 18 calculates the time period required for fully charging the battery 4 (i.e. the charging period) (step S7). This charging period is calculated using [the level of power that can be supplied (in Wh: watt-hours)] / [the vacant capacity of the battery 4 (in W: watts)]. Here, [the vacant capacity of the battery 4 (in W: watts)] is obtained by: [the full charge capacity of the battery 4 (in W: watts)] x (100 - SOC) x 0.01.

The charging controller 18 determines a charging start time point (step S8) from the charging completion time point set on the timer and the charging period. And, if the charging start time point is not earlier than the present time point (NO in step S9), then the charging controller 18 opens the AC relay 8b (in step S10), sets its own timer so as to restart at the charging start time point, and transitions into a sleep mode (step S12). This sleep mode is the same as the "sleep mode" of a personal computer, and is a mode in which only a self-timer routine remains being activated, while other functions are deactivated.

On the other hand, if no end time point is set (NO in step S2), or if the charging start time point is earlier than the present time point (YES in step S9), then the charging controller 18 performs the process of step S22 and subsequent steps. It should be noted that the charging controller 18 starts from the process of step S22 when restarting from the sleep mode.

The charging controller 18 acquires the open circuit voltage of the battery 4 by using the third voltage sensor 23, and terminates the process without closing the DC relay 31 if this open circuit voltage is higher than a predetermined threshold voltage (YES in step S22, and steps S26 and S27). The fact that the open circuit voltage is higher than the predetermined threshold voltage implies that the SOC of the battery 4 is already sufficient. In other words, if the charging controller 18 decides that the SOC of the battery 4 is high and that charging is unnecessary, then it terminates the charging process without closing the DC relay 31 even once. Typically, the voltage threshold is set at the rated output voltage of the battery 4. Generally, if the battery is sufficiently charged, its output voltage is slightly higher than its rated output voltage.

On the other hand, if the open circuit voltage of the battery 4 is lower than the predetermined threshold voltage (NO in step S22), then the charging controller 18 lowers the potential on the CPLT line to the voltage V1, and closes the AC relay 8b. Additionally, the charging controller 18 also closes the DC relay 31 (step S23). Next, the charging controller 18 supplies a PWM signal to the switching circuitry of the AC-DC converter 13, and thus starts the charging process (step S24).

The charging controller 18 continues the charging process until the SOC of the battery 4 becomes greater than a predetermined threshold value (NO in step S25). To express this in other words, the charging controller 18 charges the battery 4 until it reaches full charge. When the SOC becomes greater than the threshold value (YES in step S25), the charging controller 18 opens the AC relay 8b and the DC relay 31 (step S26), and terminates the charging process (step S27). It should be understood that, in step S25, the charging controller 18 determines the SOC based on the closed circuit voltage (CCV: Closed Circuit Voltage) of the battery 4.

The advantages of the charging device 10 of this embodiment will now be described. When a charging end time point is set with the timer, the charging device 10 specifies the level of power that can be supplied by the external power source 93, and determines a charging start time point. Accordingly, the charging device 10 is able to start charging in such a manner that charging will certainly end at the appointed charging end time point, even if the charging device 10 is being used in a region in which the level of power that can be supplied by the external power source 93 is not clear.

The charging device 10 does not operate the DC relay 31 until charging is to be started. The DC relay 31 is a very important component of the electric vehicle 100. Since, with this charging device 10, the number of times that this system main relay is operated is reduced, accordingly the durability of the system main relay may not deteriorate.

Points to keep in mind in connection with the embodiment described above will now be mentioned. The charging controller 18 of this embodiment acquires the SOC of the battery 4, and calculates the charging period (steps S6 and S7 of Fig. 3). It would also be possible to arrange for the charging controller to determine the charging start time point from a predetermined expected charging capacity, the level of power that can be supplied by the external power source, and the set time on the timer. Typically, the predetermined expected charging capacity will correspond to 100% charging capacity. In this case, the charging period will be equivalent to the time period required to charge up from a SOC of 0% to a SOC of 100%. By employing such a predetermined expected charging capacity, the charging device is able to determine the charging period without acquiring the SOC of the battery.

The vehicle of the above embodiment was an electric vehicle equipped with a single motor. However, the technique disclosed in the present specification can also be applied to a so-called plug-in type hybrid vehicle that is equipped both with a motor and with an engine for driving the wheels of the vehicle.

Representative, non-limiting examples of the present invention will now be described in further detail with reference to the attached drawings. This detailed description is merely intended to teach a person of skill in the art further details for practicing preferred aspects of the present teachings and is not intended to limit the scope of the invention. Furthermore, each of the additional features and teachings disclosed below may be utilized separately or in conjunction with other features and teachings to provide improved a charging device for an electric vehicle, as well as methods for using and manufacturing the same.

Moreover, combinations of features and steps disclosed in the following detail description may not be necessary to practice the invention in the broadest sense, and are instead taught merely to particularly describe representative examples of the invention. Furthermore, various features of the above-described and below-described representative examples, as well as the various independent and dependent claims, may be combined in ways that are not specifically and explicitly enumerated in order to provide additional useful embodiments of the present teachings.

All features disclosed in the description and/or the claims are intended to be disclosed separately and independently from each other for the purpose of original written disclosure, as well as for the purpose of restricting the claimed subject matter, independent of the compositions of the features in the embodiments and/or the claims. In addition, all value ranges or indications of groups of entities are intended to disclose every possible intermediate value or intermediate entity for the purpose of original written disclosure, as well as for the purpose of restricting the claimed subject matter.

Specific examples of the present invention have been described in detail; however, these are mere exemplary indications and thus do not limit the scope of the claims. The art described in the claims includes modifications and variations of the specific examples presented above. Technical features described in the description and the drawings may technically be useful alone or in various combinations, and are not limited to the combinations as originally claimed. Further, the art described in the description and the drawings may concurrently achieve a plurality of aims, and technical significance thereof resides in achieving any one of such aims.

## Claims

1. A charging device for charging a battery mounted on a vehicle with power supplied from an external power source, the charging device comprising:
an AC-DC converter that converts AC power supplied from the external power source to DC power;
an AC relay that connects and disconnects the AC-DC converter to and from the external power source;
a DC relay that connects and disconnects the AC-DC converter to and from the battery;
a timer to which a charging completion time point is set; and
a controller that controls the AC relay and the DC relay based on the setting of the timer;
wherein the controller is configured to perform:
after the charging completion time point has been set, closing the AC relay and specifying a level of power that the external power source can supply:
determining a charging start time point from the specified level of power and the charging completion time point; and
starting battery charging by closing the AC relay and the DC relay at the determined charging start time point.

2. The charging device of claim 1, wherein the controller is configured to perform:
measuring an open circuit voltage of the battery before starting the charging; and
terminating the charging process without closing the DC relay if the open circuit voltage is higher than a predetermined voltage threshold.

3. The charging device of claim 1 or 2, wherein the controller determines the charging start time point from the specified level of power, the set time point of the timer, and remaining battery charge.

4. The charging device of claim 1 or 2, wherein the controller determines the charging start time point from the specified level of power, the charging completion time point, and predetermined expected charging capacity.

5. An electric vehicle equipped with the charging device of any one of claims 1 to 4.

6. A method of charging an electric vehicle, the method comprising steps of:
specifying a level of power that can be supplied from an external AC power source;
determining a charging start time point from a charging completion time point set by a user and the specified level of power; and
at the charging start time point, closing a relay that connects a battery and an AC-DC converter that converts the external AC power source to DC power.
